# EUROPÄISCHE PATENTANMELDUNG

(11) **EP 2 109 290 A1**
(43) Veröffentlichungstag der Anmeldung: **14.10.2009**
(21) Anmeldenummer: 08007145.9
(22) Anmeldetag: 10.04.2008
(51) Int. Cl.: H04L 29/08, G06F 17/30, G06F 9/50

(54) **Verfahren zum Datenaustausch und Automatisierungsgerät**

(71) Anmelder: SIEMENS AKTIENGESELLSCHAFT, 80333 München (DE)
(72) Erfinder: Herberth, Harald, 90522 Oberasbach (DE); Plaum, Reiner, 91052 Erlangen (DE); Talanis, Thomas, 91336 Heroldsbach (DE); Volkmann, Frank, 90475 Nürnberg (DE)

(57) **Zusammenfassung**

Bei einem Verfahren zum Datenaustausch zwischen einem ersten Gerät (10) und einem zweiten Gerät (11), wobei das erste und das zweite Gerät (10,11) zur Kommunikation miteinander eine Web-Technologie aufweisen und über ein Netzwerk (15) in Verbindung stehen, wobei das erste Gerät (10) als ein Web-Client und das zweite Gerät (11) als ein Web-Server konfiguriert wird, und wobei das erste Gerät (10) eine Anfrage (203a) an das zweite Gerät (11) richtet, welches für diese Anfrage (203a) einen Speicherbereich in einem ihm zugeordneten Speicher (18) belegt und durch eine Mitteilung (204a) von Daten an das erste Gerät (10) die Anfrage (203a) beantwortet, wird durch das Reservieren des belegten Speicherbereiches dem ersten Gerät (10) ermöglicht, den gleichen Kanal zu benutzen, wie er bei der Anfrage (203a) durch das erste Gerät (10) aufgebaut wurde. Unsichere Zeitfenster für den Datentransport in der Automatisierung werden durch das Verfahren vermieden.

## Beschreibung

Die Erfindung betrifft ein Verfahren zum Datenaustausch zwischen einem ersten Gerät und einem zweiten Gerät, wobei das erste und das zweite Gerät zur Kommunikation miteinander eine Web-Technologie aufweisen und über ein Netzwerk in Verbindung stehen, wobei das erste Gerät als ein Web-Client und das zweite Gerät als ein Web-Server konfiguriert wird und wobei das erste Gerät eine Anfrage an das zweite Gerät richtet, welches für diese Anfrage einen Speicherbereich in einem ihm zugeordneten Speicher belegt und durch eine Mitteilung von Daten an das erste Gerät die Anfrage beantwortet. Des Weiteren betrifft die Erfindung ein Automatisierungsgerät umfassend eine Ethernet TCP/IP-Schnittstelle, einen Speicher, wobei Programmfunktionen zum Ausführen von Kommunikationsaufgaben auf Basis eines Http-Protokolls im Speicher hinterlegt sind, wobei bei einer Kommunikationsanfrage ein Speicherbereich des Speichers belegt wird.

In der Automatisierungstechnik und bei Automatisierungslösungen für Industrieanlagen wird für die Kommunikation zwischen den Automatisierungsgeräten zunehmend eine Web-Technologie eingesetzt. So wird z.B. auf dem Feld des Bedienens und Beobachtens von Industrieprozessen die Web-Technologie bereits mit Vorteil genutzt. Dabei ist es beispielsweise vorteilhaft, dass eine HMI-Applikation auf Basis der Web-Technik für ein Automatisierungsgerät nur ein einziges Mal erstellt werden muss und danach von einer Vielzahl von beispielsweise Windows PCs, PDAs und Web-Panels abgerufen werden kann. Die zuvor genannten HMI-Geräte werden dabei als ein Web-Client konfiguriert.

Ein als Web-Server konfiguriertes Automatisierungsgerät kann eine Vielzahl von Web-Clients, z.B. HMI-Panels mit Prozessdaten versorgen. Die von dem Automatisierungsgerät gesteuerten Prozesse können ebenfalls über die Web-Clients, also mittels der HMI-Geräte, bedient werden. Neben einer Vielzahl von Protokollen wird für die Kommunikation zwischen dem Automatisierungsgerät und einem HMI-Gerät auch die AJAX-Technologie (Asynchronous Java Script and XML) eingesetzt. Eine Kommunikation zwischen einem AJAX-Client, beispielsweise ein Internet-Explorer oder ein ähnlicher Browser auf einem HMI-Gerät, und einem AJAX-Server, beispielsweise ein Automatisierungsgerät oder eine Web-basierte SPS, erfolgt üblicherweise über einen permanent offenen Http Request, welcher einen Eventkanal bildet. Für den Fall, dass der Web-Server ein Event an den Web-Client meldet, wird der zuvor genannte offene Http Request beantwortet. Darauf folgend sendet der AJAX-Client erneut einen http Request zur Reinstallation des Eventkanals. Nachteilig hieran ist, dass nach einem Request-Response-Zyklus ein neuer, unabhängiger Request gestellt wird und der Kanal wieder freigegeben wird. Durch dieses so genannte "AJAX-Verhalten" entsteht ein "unsicheres" Zeitfenster, innerhalb dessen ein weiterer AJAX-Client den freigewordenen AJAX-Kanal für sich beanspruchen könnte. Wenn dieser Kanal die letzte dafür vorgesehene Ressource in einem begrenzten Speicherbereich war, dann ist dem ersten AJAX-Client die Reinstallation des Kanals nicht mehr möglich. Damit können wichtige Prozessdaten, welche die SPS bzw. das Automatisierungsgerät an das HMI-Gerät sendet, für den Client verloren gehen. Dieses unsichere Zeitfenster beeinträchtigt wesentlich die Einsatzfähigkeit von AJAX-Kommunikationslösungen im Automatisierungsumfeld. Bei kritischen Prozessen in der Automatisierungstechnik kann ein "unsicheres" Zeitfenster nicht hingenommen werden.

Es ist daher die Aufgabe der Erfindung ein Verfahren bzw. ein geeignetes Automatisierungsgerät bereitzustellen, welches eine sichere Kommunikation zwischen einem Client und einem Server erlaubt.

Die Aufgabe wird bei dem eingangs genannten Verfahren dadurch gelöst, dass der belegte Speicherbereich für eine bestimmbare Zeitspanne reserviert wird und dadurch sichergestellt ist, dass dem ersten Gerät für eine weitere Anfrage auf die Mitteilung der reservierte Speicherbereich im zweiten Gerät zur Verfügung steht. Innerhalb dieser Zeitspanne kann nur das erste Gerät diesen reservierten Speicherbereich wieder verwenden. Hierdurch wird erreicht, dass eine Kommunikationsanfrage eines dritten Gerätes nicht in die Kommunikation zwischen erstem und zweitem Gerät eindringen kann. Mit Vorteil steht nun eine robuste Kommunikationskopplung zwischen dem ersten Gerät und dem zweiten Gerät, also zwischen dem Client und dem Server, zur Verfügung. Von besonderem Vorteil ist hierbei, dass mit diesem Verfahren ein sicheres Bedienen von Maschinen in einem Industrieprozess über das Internet erfolgen kann.

In weiterer Ausgestaltung der Erfindung wird bei dem Verfahren mit der Verarbeitung der Anfrage ein Kanalschlüssel generiert und der reservierte Speicherbereich dem Kanalschlüssel über eine Zuordnungsfunktion zugeordnet. Dabei wird der Kanalschlüssel dem ersten Gerät mitgeteilt. Ein Wiederbenutzen des reservierten Kanals kann also durch den Client nur erfolgen, wenn er bei einer erneuten Anfrage den korrekten Kanalschlüssel mitliefert.

In einer weiteren vorteilhaften Ausgestaltung wird als ein Kommunikationsprotokoll das TCP/IP-Protokoll verwendet.

In einer besonders vorteilhaften Ausgestaltung werden in der Web-Technologie und für das Protokoll der Kommunikation Befehlsfolgen aus dem Konzept des Asynchronous JavaScript and XML (AJAX) verwendet. AJAX bezeichnet ein Konzept der asynchronen Datenübertragung zwischen einem Server und einem Browser oder Client, das es beispielsweise ermöglicht, innerhalb einer HTML-Seite eine Http-Anfrage durchzuführen, ohne die Seite komplett neu laden zu müssen.

Bei dem eingangs genannten Automatisierungsgerät wird die Aufgabe dadurch gelöst, dass Reservierungsmittel, welche den belegten Speicherbereich reservieren, in dem Automatisierungsgerät vorhanden sind.

Vorzugsweise ist das Automatisierungsgerät dabei mit der Funktionalität eines Web-Servers implementiert.

Besonders vorteilhaft ist dabei, dass der in dem Automatisierungsgerät implementierte Web-Server ein AJAX-Server ist.

Ein Ausführungsbeispiel und weitere vorteilhafte Ausgestaltungen werden nachfolgend anhand der Zeichnung beschrieben.

### Es zeigen:

- FIG 1: einen AJAX-Server als SPS und
- FIG 2: einen Kommunikationsablauf zwischen einem Client und einem Server.

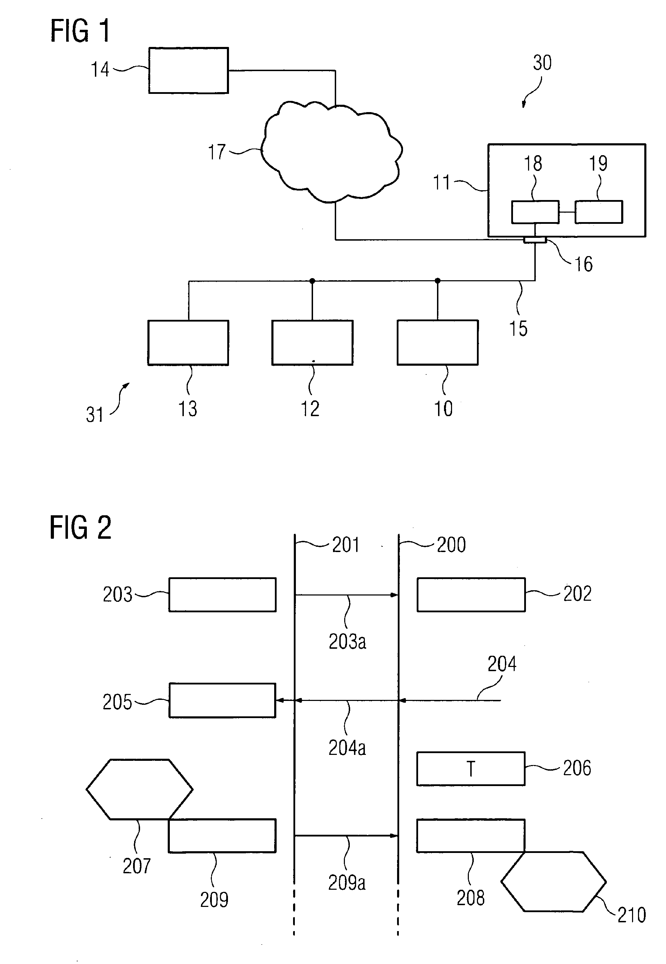

Gemäß FIG 1 ist ein erstes Gerät 10 über ein LAN 15 an ein zweites Gerät 11 angeschlossen. Das erste Gerät 10 steht hierbei stellvertretend für ein HMI-Bediengerät für einen, durch das zweite Gerät 11 gesteuerten Bedienprozess. Das zweite Gerät 11 ist als eine Web-basierte SPS ausgestaltet und repräsentiert einen AJAX-Server 30. Der AJAX-Server 30 weist dabei einen Speicherbereich 18 und Reservierungsmittel 19 auf. Über eine Ethernet-TCP/IP-Schnittstelle 16 steht der AJAX-Server 30 zu einer Mehrzahl von AJAX-Clients 31 in Verbindung. Die AJAX-Clients 31 werden dabei durch das erste Gerät 10, einen ersten Bedien- und Beobachtungsplatz 12, einen zweiten Bedien- und Beobachtungsplatz 13 und einen dritten Bedien- und Beobachtungsplatz 14 gebildet. Der dritte Bedien- und Beobachtungsplatz 14 ist dabei über das Internet 17 mit dem AJAX-Server 30 verbunden. Mittels des dritten Bedien- und Beobachtungsplatzes 14 kann über den AJAX-Server 30 ein zu steuernder Prozess weltweit beobachtet und gesteuert werden. Dabei ist es besonders von Vorteil, dass mit dem erfindungsgemäßen Verfahren über das Internet eine Direktkopplung zu den zu steuernden Maschinen innerhalb des Prozesses aufgebaut werden kann. So ist es z.B. möglich, die Maschinen über einen Direkttastenbetrieb manuell zu bedienen. Beispielsweise kann der Anlagenfahrer die Walzen bei einem Walzwerk direkt per Handbedienung über das HMI-Gerät positionieren.

Für ein Engineering-System, mit welchem komplette Automatisierungslösungen für Automatisierungsgeräte und deren zugehörigen Komponenten projektiert werden, ist es mit dem erfindungsgemäßen Verfahren von Vorteil, dass der Anwender in einem Projektierungstool für die Kommunikation direkte Kopplungen mit dem Automatisierungsgerät projektieren kann.

Gemäß FIG 2 ist der verfahrensgemäße Kommunikationsverlauf zwischen einer Web-Serverseite 200 und einer Web-Clientseite 201 dargestellt. Auf der Web-Clientseite 201 wird mit einem XML-Http-Request.Get 203 an den Web-Server 30 eine Anfrage 203a gestartet. Der Web-Server 30 empfängt diese Anfrage 203a als ein Http.Get 202. Auf die Anfrage 203a wird mittels des Http.Get 202 im Web-Server 30 ein Event 204 ausgelöst. Dieses Event 204 ist entweder ein Ereignis aus dem zu steuernden Prozess oder eine Anwenderinteraktion. Mit dem Event 204 wird eine Mitteilung 204a, welche XML-Event-Daten und einen Kanalschlüssel enthält, an den Web-Client 31 gesendet. In einer Event-Verarbeitung 205 werden die Event-Daten zur Weiterverarbeitung, beispielsweise zur Darstellung auf einem Bildschirm, entgegengenommen. Auf der Web-Client-Seite 201 wird daraufhin eine Kanalaufbaufunktion 207 aufgerufen. Durch diese Kanalaufbaufunktion 207 wird ein unmittelbarer Wiederaufbau des Kanals veranlasst. Der Web-Client 31 setzt daraufhin ein XML-Http-Request.Get 209 einschließlich eines Kanalschlüssels ab. Der Kanalschlüssel und der XML-Http-Request.Get werden als eine weitere Anfrage 209a an den Web-Server 31 übermittelt. Auf der Web-Serverseite 200 wird die Antwort 209a als ein Http.Get+Kanalschlüssel 208 ausgewertet. Mit einer Zuordnungsfunktion 210 wird sichergestellt, dass bei einem korrekten Kanalschlüssel der gleiche Kanal wiederbenutzt werden kann. Um die Wiederbenutzung des zuvor aufgebauten Kanals zu gewährleisten, wird auf der Web-Serverseite 200 bei Absenden des Events 204 der Kanal mittels des in FIG 1 beschriebenen Reservierungsmittels 19 über eine Reservierungsüberwachung 206 für 20 sec. reserviert. Durch die Reservierungsüberwachung 206 ist sichergestellt, dass die Verbindung zwischen Web-Client 31 und Web-Server 30 nicht abbricht. Wichtige Informationen, welche der Web-Server 30 an den Web-Client 31 sendet, können somit nicht verloren gehen. Dies ist besonders wichtig bei der Steuerung von Echtzeit- und kritischen Prozessen im Automatisierungsumfeld.

## Patentansprüche

1. Verfahren zum Datenaustausch zwischen einem ersten Gerät (10) und einem zweiten Gerät (11), wobei das erste und das zweite Gerät (10, 11) zur Kommunikation miteinander eine Web-Technologie aufweisen und über ein Netzwerk (15) in Verbindung stehen, wobei das erste Gerät (10) als ein Web-Client und das zweite Gerät (11) als ein Web-Server konfiguriert wird, und wobei das erste Gerät (10) eine Anfrage (203a) an das zweite Gerät (11) richtet, welches für diese Anfrage (203a) einen Speicherbereich in einem ihm zugeordneten Speicher (18) belegt und durch eine Mitteilung (204a) von Daten an das erste Gerät (10) die Anfrage (203a) beantwortet,
**dadurch gekennzeichnet,** das der belegte Speicherbereich für eine bestimmbare Zeitspanne (T) reserviert wird und dadurch sichergestellt ist, das dem ersten Gerät (10) für eine weitere Anfrage (209a) auf die Mitteilung (204a) der reservierte Speicherbereich im zweiten Gerät (11) zur Verfügung steht.

2. Verfahren nach Anspruch 1,
wobei mit der Verarbeitung der Anfrage (203a) ein Kanalschlüssel generiert wird und der reservierte Speicherbereich dem Kanalschlüssel über eine Zuordnungsfunktion (210) zugeordnet wird.

3. Verfahren nach Anspruch 2, wobei der Kanalschlüssel dem ersten Gerät (10) mitgeteilt wird.

4. Verfahren nach einem der Ansprüche 1 bis 3, wobei als ein Kommunikationsprotokoll das TCP/IP-Protokoll verwendet wird.

5. Verfahren nach einem der Ansprüche 1 bis 4, wobei in der Webtechnologie Befehlsfolgen aus dem Konzept des Asynchronous Java Script und XML (AJAX)verwendet werden.

6. Automatisierungsgerät (11) umfassend eine Ethernet TCP/IP-Schnittstelle (16), einen Speicher (18), wobei Programmfunktionen zum Ausführen von Kommunikationsaufgaben auf Basis eines Http-Protokolls im Speicher (18) hinterlegt sind, wobei bei einer Kommunikationsanfrage (203a) ein Speicherbereich des Speichers (18) belegt wird, **gekennzeichnet durch** Reservierungsmittel (19), welche den belegten Speicherbereich reservieren.

7. Automatisierungsgerät (11) nach Anspruch 6, wobei die Funktionalität eines Web-Servers implementiert ist.

8. Automatisierungsgerät (11) nach Anspruch 7, wobei der Web-Server ein AJAX-Server (30) ist.
